# EUROPEAN PATENT APPLICATION

(11) **EP 1 727 063 A1**
(43) Date of publication of application: **29.11.2006**
(21) Application number: 06252757.7
(22) Date of filing: 26.05.2006
(51) Int. Cl.: G06F 17/30

(54) **Systems for user profiling and search results filtering based on propensity modelling**

(30) Priority: 26.05.2005 GB 0510808
(71) Applicant: MoneyExpert Limited, Merseyside WA12 0JQ (GB)
(72) Inventor: Gardner, Sean, Newton-le-Willows Merseyside WA12 0JQ (GB); O'Shaughnessy, Alex, Newton-le-Willows Merseyside WA12 0JQ (GB)
(74) Representative: Dunlop, Hugh Christopher

(57) **Abstract**

An information system having various databases (30-40 and 50-52) for storing data relating to products or services, and risk data models or propensity models. A web server (48) provides web pages (20) through which a user is able to express choices, which result in querying the product database (32) to provide a raw result set, and filtering of the raw result set based on a risk model to eliminate results not having a likelihood of a successful outcome. The filtered result set is displayed. A propensity model database may be provided for storing data modelling the propensity of an outcome in relation to related products or services, e.g. based upon demographic or lifestyle data. A tracking tool may be used to defme past behaviour of the user.

## Description

### Field of the Invention

This invention relates to information systems, databases and websites for providing users with data relating to products or services.

### Background to the Invention

Aggregator websites are known for displaying to on-line customers selected products or servers aggregated from several different sources. For example, in the airline industry, flights from different airlines can be aggregated in a single website to give an online user a choice between different carriers on the same route. An example of such a website is shown in US Patent Application 2004/0064428.

In the field of financial services, trade magazines offer printed aggregated tables of services, such as mortgages, investments and the like. It would be useful to provide such financial services information on an aggregated website.

When data from many different product or service providers are aggregated, the user is presented with the problem of sorting and selecting the product or service best suited to him or her. If there is a large number of alternatives, these can be sorted using a "star" rating, for example based on expert views. This is a limited form of sorting and selection, and does not necessarily take into account a user's own preference between aspects, features or parameters of different product offerings.

Another problem lies in presenting a service provider's product offerings to the user. Simple aggregation websites do not assist a service provider in targeting services to users who are most likely to want those services or products (beyond merely filtering based on choices, such as preferred departure time, expressed by the user). Neither do these websites tailor their presentations according to whether the user is a satisfactory match to the service provider. This is an important aspect in financial services products such as mortgages, loans and credit cards, where the user is not automatically approved to "buy" the product (as in the case of an airline ticket), but the service provider has to consider the creditworthyness of the applicant and other factors before proceeding to offer the product or service to the customer.

Targeting financial services customers to service providers is a very expensive matter. This service has traditionally been provided by high street branches. Customers have traditionally relied on word-of-mouth referrals and have formed "purchasing" decisions based on opinions formed from face-to-face discussions with staff in high street branches. As more and more consumers turn to the Internet to research products that are available, and as high street branches become unsustainably expensive when serving a diminishing base of customers who prefer that mode of access to product information and to products, so financial service providers have become more willing to pay premiums to receive direct applications from customers who are better suited to their products. Pre-screening of applicants who are not suited also saves on administrative costs.

There is a need for an information system that is more adaptable to the needs of a particular user and/or that matches users to services providers and their products in a more targeted manner.

A further problem with existing systems lies in the desire of the service provider to solicit complete information on the person applying for the product. The service provider can ask many questions in the application form, but applicants may be reluctant to answer questions that are of limited apparent relevance and might even give incorrect or misleading answers.

There is a need among service providers for richer information regarding applicants who apply for their services, preferably without inundating the applicant with an unduly large number of questions. There is a need to derive information about applicants for financial products without posing direct questions.

### Glossary of Acronyms

- ADO: - ActiveX Data Objects
- APR: - annual percentage rate
- CRM: - customer relationship management
- FTP: - file transfer protocol
- HTML: - hypertext mark-up language
- KFI: - key facts illustration
- LTV: - life-time value
- LVR: - loan-to-value ratio
- PAF: - postal address file
- SQL: - structured query language
- URL: - uniform resource locator
- XSLT: - extensible stylesheet language transformations.

### Summary of the Invention

In accordance with a first aspect of the invention, an information system is provided comprising: a product database for storing data relating to products or services, a risk model database for storing data modelling the likelihood of an outcome in relation to the products or services, and a web server coupled to the product database and the risk model database. The web server comprises: means for providing web pages through which a user is able to express choices, query means for querying the product database in accordance with the user choices to provide a raw result set, filter means for providing a filtered result set by filtering the raw result set based on the risk model database to eliminate results not having a likelihood of a successful outcome, and display means for displaying the filtered result set.

The risk model database preferably scores likelihood of a successful outcome based upon at least one of: postcode, demographic data and lifestyle data.
The risk model data may be built up using tracking data defining past behaviour of the user when using the website.

A risk profiling database may be provided coupled to the web server, having means to invite a user to enter user data with the web server querying the risk profiling database using the user data to thereby deliver at least one risk score. In this embodiment, means are provided for obtaining a preferred range of risk scores for each result within the result set; and refining means are provided for refining the result set based upon the risk score for the user. The display means display the refined results. The user data preferably comprises at least one of: user identity and postcode/zipcode.

A user may be invited or required to express preferred attributes, which are captured as a preferred attribute set for the user, and the filtered result set may be rank ordered based on the preferred attribute set, and in the preferred embodiment, the rank-ordering/filtering takes into account the user's preferred attribute set relative to preferred attributes previously obtained through sampling.

In a preferred embodiment, the information system further comprises a customer profiling process/engine for developing a profile for a user, wherein the web server provides the user with a click-through button for each of the displayed results to direct the user to a provider website at which the corresponding product or service can be obtained, and wherein the website captures data relating to a click-through action by the user and directs this data to the customer profiling engine to update a profile for that user.

An applet or script can be delivered to a browser of a user to capture user actions while the browser is browsing web pages served by the web server. With this feature, the web server is arranged to maintain a session with the browser and to obtain the user actions from the applet or script during the session and may further be arranged to obtain from the user's browser information indicating that the user has returned to the web pages served by the web server following a browsing sequence in which web pages of another server have been browsed.

A propensity model database is preferably provided for storing data modelling the propensity of an outcome in relation to related products or services, for example scoring propensity towards a successful outcome based upon at least one of: demographic data and lifestyle data. The propensity model data may be built up using tracking data defining past behaviour of the user when using the website.

In accordance with a second aspect of the invention, an information system is provided comprising a web server for serving web pages to an internet. The web server has means for delivering an applet or script to a browser of a user to capture user actions and means for retrieving the user actions from the applet or script. A profiling engine performs correlations on actions of users to thereby categorize users according to browsing actions.

The profiling engine preferably correlates actions of users with profile data for those users to search for correlations therebetween.

In accordance with a third aspect of the invention, an information system is provided comprising a web server for serving web pages to an internet. The web server has means for delivering an applet or script to a browser of a user to capture user actions and means for retrieving the user actions from the applet or script. A profiling database has behaviour definitions stored therein, and has means for comparing captured user actions with behaviour definitions to categorize a user according to the user actions. The user actions may include user selections among choices presented by the web pages.

User actions may be compared with stated user preferences, to identify user actions that are contradictory to stated user preferences and to adjust a user profile when a user takes an action that is contradictory to a stated preference.

In accordance with a fourth aspect of the invention, an information system is provided comprising means for receiving from a third party historical data describing the outcome of previous referrals, and means for refining a propensity model using the historical data. The propensity model is used to control a filter to provide a filtered result set by filtering the raw result set based on the propensity model to eliminate results not having a propensity to a successful outcome.

The propensity model is built up using historical data provided to the service providers by the system and analysed by the service providers to identify trends, e.g. customer type X is generally accepted, Y is borderline and Z is rejected, or customer type X is likely to also purchase product B, Y is likely to also purchase product C and Z is not likely to purchase further products.

A preferred embodiment of the invention will now be described, by way of example only, with reference to the accompanying drawings.

### Brief Description of the Drawings

Fig. 1 is a block diagram illustrating an architecture of an information system according to a preferred embodiment of the invention;
Fig. 2 is an illustration of an output display of the system of Fig. 1;
Fig. 3 is a process flow diagram illustrating various software modules stored and executed by the system of Fig. 1;
Figs. 4a to 4e are illustrations of user screens produced by the system of Fig. 1 for collecting user input for purposes of scorecard production;
Fig. 5 is a block diagram illustrating certain elements of the system of Fig. 1 in greater detail;
Fig. 6 shows the software modules of Fig. 3 with certain further modules; and
Figs. 7 and 8 are sketches for illustration of the operation of certain aspects of the system.

### Detailed Description of the Preferred Embodiments

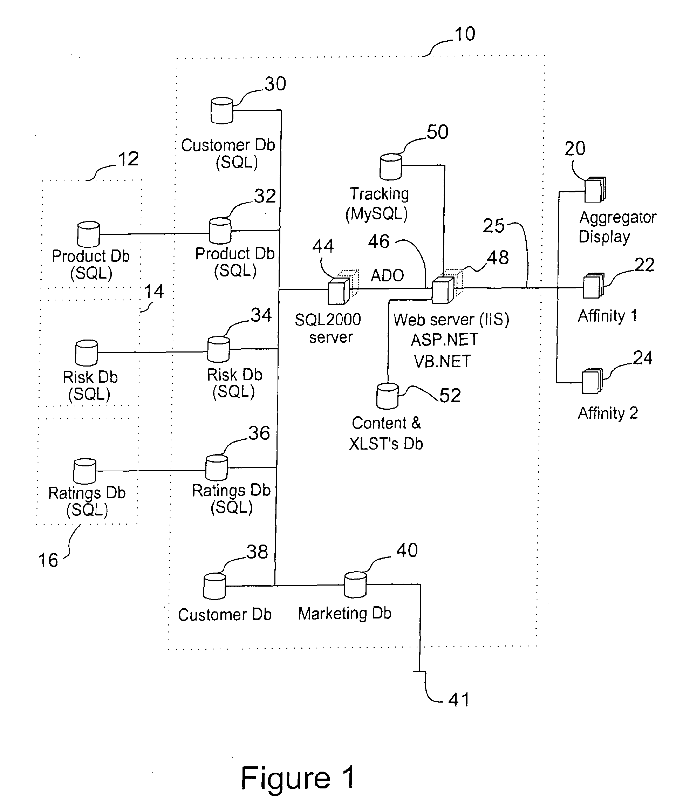

Referring to Fig. 1, the architecture of a typical information system in accordance with the invention is shown as comprising a central system 10 coupled to a product datafeed 12, an optional risk datafeed 14 and a ratings datafeed 16. To the right hand side of the diagram, the system is shown as having various presentation pages in the form of a principal aggregator website display 20 and various optional affinity website displays 22 and 24. These displays 20 to 24 are illustrated as connected to the system 10, in the sense that they appear on the web browser of a user's computer connected to the system 10 via the Internet 25.

The central system 10 comprises a commercial database 30, a product database 32, a risk database 34, a ratings database 36, a customer database 38 and a marketing database 40, all connected via a suitable bus, local area network or other physical or logical connection 42 to a central server 44. Coupled to the central server 44 via ADO connection 46 is a web server 48, having an associated tracking database 50 and a content and XLST database 52. It will, of course, be understood by one skilled in the art that these various databases and servers need not be physically separate but can be co-located on one or more computers and can be combined or sub-divided in various ways.

The product datafeed 12 provides details of all the products or services to be aggregated and presented to a user. Throughout this description, the term "product" will be used to extend to services in the sense of a service provider being prepared to offer a service (such as a mortgage or an airline flight) according to a predefmed specification. The product datafeed 12 provides the essential parameters that define the product. For example, in the case of a mortgage, the product datafeed 12 can provide the name of the mortgage company offering the mortgage product, the average percentage rate (APR), the repayment period, and other parameters such as whether the interest rate is fixed or variable, for how long it is fixed, penalties that apply, arrangement fees and the like. By way of another example, in the case of an airline flight, the product datafeed may provide the name of the airline, the flight number, the departure and destination airports, the departure time, the cost and other such parameters. Similarly, for a physical product this datafeed may provide the supplier, the dimensions, the price and other specifications. Product datafeed 12 preferably has secure connections from various product suppliers who may load product information into this datafeed by remote connection. Product database 32 is maintained up-to-date with all the specification parameters of the products currently being offered by the system using file transfer protocol (FTP), for example by performing a file transfer on a daily basis. This is a convenient arrangement for management of the data and system, but is not essential. As an example of an alternative arrangement, it can be arranged that each of the providers has a product datafeed 12, all feeding to the product database 32 within the system.

Referring to risk datafeed 14, this is an optional datafeed, which is particularly useful where the information system is used to aggregate financial products. It provides credit/risk models to risk database 34. An example of a model that may be stored on this database is a simple banding by postcode or zip code. For example, experience may show that certain postcodes in the United Kingdom represent a lower credit risk for customers or potential customers from those postcodes than is shown by other postcodes. Credit risk can be scored on a score of 0 to 1000, and credit bands can be defined, for example as illustrated in Table 1.

**Table 1**

| **Upper limit** | **Lower limit** | **Band definition** |
|---|---|---|
| 1000 | 800 | super-prime accept |
| 800 | 450 | prime accept |
| 450 | 200 | sub-prime accept |
| 200 | 0 | decline |

The bands do not necessarily have strict delimiting boundaries, but may overlap. Overlapping bands may be useful, as will be understood later, for the purpose of widening the choice of products available to a given consumer and maximising the chance of acceptance of a given product, but for simplicity, in the first instance, the bands can be considered as non-overlapping.

The granularity of the risk database 34 may be high or low. A low granularity database would, for example, merely divide households by postcode and would match postcodes to risk bands. At a higher level of granularity, the postcodes can be sub-divided further to individual household level. The risk models stored in database 34 need not be based on postcode, but can be divided by other variables that are predictive of product acceptance.

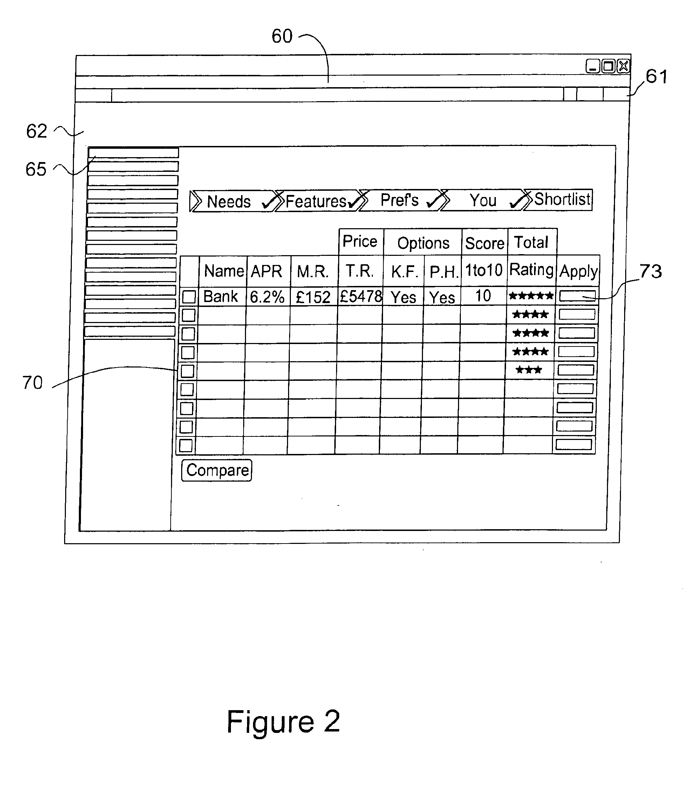

The ratings datafeed 16 is worthy of particular note. It is coupled (again by FTP) to a mirroring ratings database 36 within the system. This is again a matter of convenience, because it is envisaged that the ratings datafeed 16 will be managed and operated by one operational entity whereas the system 10 is managed and operated by another entity. The ratings database 36 will be described in greater detail with reference to Fig. 2, but in general terms it contains qualitative research data and quantitative research data regarding consumer demographics, and scaling and validation information.

This database has the capability of generating individual product ratings for products stored in the product database 32 (e.g. on a star basis from one-star to five-star rating) the ratings database can rate individual providers, or can rate individual products of individual providers. It collects feedback from consumers to generate these ratings. By way of example, a statistically significant population of test consumers are asked to give feedback illustrating preferences for different products or different aspects of these products and the services received from providers. These test consumers are asked to provide other data such as age, income and the like. The data provided by the test consumers is validated using demographic data for the entire population (e.g. the entire population of the United Kingdom), to ensure that the sample population responding to the questionnaires is representative of the entire population, or representative of a given age group, geographical location, etc. The data can be weighted using the demographic data for the entire population to ensure that it is representative. Using the responses from the sample population, the ratings datafeed 16 uses multivariate regression analysis to apply a rating to each provider, or each product of each provider. The ratings datafeed 16 (or database 36) uses or includes a multivariate regression analysis engine (such as the program "NLREG" (trade mark) available from www.nlreg.com) to perform this analysis, in a manner well known in the art of marketing. (As an alternative, conjoint analysis can be used - see, for example, "Understanding Conjoint Analysis in Fifteen Minutes", Joseph Curry, Sawtooth Technologies, Inc, 1996).

As will be explained below, the connection between the ratings datafeed 16 and the mirror ratings database 36 is a two-way connection. The information system 10 is able to provide feedback to the ratings datafeed 16 to refine and improve the ratings generated.

Turning now to the contents of the information system 10, a commercial database 30 is provided which is a look-up table containing the commercial links with providers of services. This data is in the form of the value of each individual user logging onto the system, the value of each individual transaction that a user may request (e.g. an application for a financial product or a request to purchase an airline seat) and the value per executed transaction (e.g. value of each financial product delivered or each airline seat sold). Note that value may be stored in terms of the cost of arriving at that user, that application or that transaction, but is preferably stored in terms of the price to be requested from a provider for introducing a customer to that provider, or for introducing a customer application, or for brokering a concluded transaction.

A customer database 38 is provided which captures customer information via registration or form-filling by a customer logging on to the system website, and which tracks information and behaviours of that customer, as will be described below. The customer database 38 also records the marketing campaign to which the customer first responded and a range of other data for that customer. (Note that terms "customer" and "user" are used interchangeably). Examples of data stored that may track the activity of a user include high level information meaningful to a human operator, such as whether or not that user has been guided through a web console, but it may also include low-level data that is only meaningful when combined with the HTML code of the web pages through which that user has navigated, or which is only meaningful when correlated with other behaviours (such as move-and-click data captured by an applet on the user's browser). This is described in greater detail below.

Rather than processing information on the customer database 38, a marketing database 40 is provided which includes tables copied from the customer database 38 and further includes processed information relative to individual customers. The marketing database 40 has an interface 41 for delivering processed data to providers by one of several means. Examples of means of delivery of this data to providers include automated delivery through an attachment to a referring URL, or batch delivery. These details are described below.

The central server 44 contains a powerful query engine for querying the various databases 30, 32, 34, 36, 38 and 40 using standard query language (SQL).

The web server 48 contains a complete definition of a website which may be visited by a user over the internet 25. This website includes a number of modules. It includes a registration module, which invites a user to register on the system and to enter basic user specific information, such as name and address. It also contains a console module for guiding a user through a process, the conclusion of which will be the presentation to the user of aggregated product data. The website further comprises a display module defining the manner in which aggregated product information will be displayed to the user. The web pages stored on the web server 48 can have the capability of placing a cookie on a user's computer, in a manner well known in the art, for purposes such as storing a password for ease of retrieval and purposes such as noting the time between log-on actions. A further feature of the web pages stored on web server 48 is their ability to load a tracker applet onto the user's remote computer. Reference is made to UK Patent No. GB 2357679B for a description of such a tracker applet, available from Speed-trap.com Ltd under the trademark "Prophet", and reference is made to US Patent No. 6,532,023 for similar tracker technology.

The general operation of the system of Fig. 1 is as follows.

A user accesses the web pages 20 served by the web server 48 via the Internet 25 using a remote computer (not shown in Fig. 1, but encompassing the elements shown on the right-hand side of the figure). On first accessing the website, the user may be invited to register, but this is not essential. Registering on the website involves the user entering a minimum set of personal data, such as name, address and date of birth, but such data can be entered later in the process as will be described. Any data entered by the user is captured by the web server 48.

At the same time as first accessing the web pages 20, a tracking applet (or script) is sent to the user's browser and is stored on the user's computer. This applet may be substantially as described in UK Patent Application No. GB 2357679A and is available from Speed-trap.com Ltd under the trademark "Prophet". To date, such an applet has been useful for reporting statistical information about how a visitor uses a website and navigates through a website, but here it will be put to a new purpose as will be described. The user need not be aware of the downloading of the applet. It is downloaded in the same manner as any HTML document.

Each page of the website 20 has a URL pointing to the tracker applet in Javascript, located on a server within the same domain. (For load splitting purposes it is not necessarily on the same server as the website 20.) The tracker applet specifies the domain(s) that it will track. It cannot track any other page not in that domain (or those domains). The applet reports all tracked parameters to the web server 48 and they are stored on the tracking server 50.

As an optional feature, the final page of a service provider application website (e.g. a "thank you for applying for this product" page) can also contain code which allows the tracker applet to report the conclusion of a service application sequence or similar sequence on a provider website.

The web server 48 contains data defining a decisioning tree, i.e. a sequence of questions or alternatives presented to a user to guide the user along a selectable path to information particular to that user's needs. The decisioning tree might, for example, relate to a selection of airline flights and might, for example, start with the question as to whether the user wants a single or a return flight, eventually leading to display of a selection of potentially suitable flights. For the purposes of the following description, the example is given where the website offers aggregated financial products, especially mortgage products.

Upon response by the user to questions posed, or following selection of optional tabs, buttons, etc. using the user's point-and-click mouse or other entry device, the web server 48 reaches a screen at which an aggregated table of product offerings is presented. An example is given in Fig. 2. Before or after such a screen is reached, the user is invited to navigate through a series of console screens. These will be described later.

The example of an output screen shown in Fig. 2 comprises a typical web page frame 60 with navigation icons 61 (of which more may be presented), a banner field 62 (for displaying a trade mark or the name of the aggregator service), a menu 65 offering different products to be aggregated, and a main results field 70. Other fields may be provided, including other buttons to lead the user to various parts of the website.

Referring to the main results field 70, this field displays products from the product database 12 that match the criteria entered by the user in the course of navigating through the decisioning tree. The results shown are selected by creating a set of SQL queries (or a compound SQL query) in the SQL2000 server 44, which cause a look-up in the product database 12 and cause a set of results to be returned to the SQL 2000 server 44 and thence to the web server 48 for display in the manner shown. Fig. 2 shows just four results by way of example, but with more results the window can be expanded and a "next" button can assist the user to navigate down the list.

The results shown in Fig. 2 are sorted by the SQL 2000 server in a defined sort order. In the example shown, each result has a rating (e.g. 5-star or 4-star), and the results are sorted in order of decreasing rating. A significant aspect of the present invention lies in the manner in which these ratings are generated, and thus the presentational order of results and/or the filtering of results to give the result set.

In the past, it has been known to apply so-called independent expert ratings to loan products and to sort products according to these ratings. A problem with such an approach is the relevancy of the ratings criteria to the user in question.

Ratings can be very subjective and can balance a large number of factors. A further problem with prior art aggregator websites lies in the difficulty in filtering results to arrive at a reduced set of results meaningful to a particular user. It is not in the interest of the user or the financial institution to present, for example, products for which the user is not qualified or is unlikely to be qualified. Time is wasted on both sides if a user applies for products which are likely to be refused or do not match the consumer's requirements.

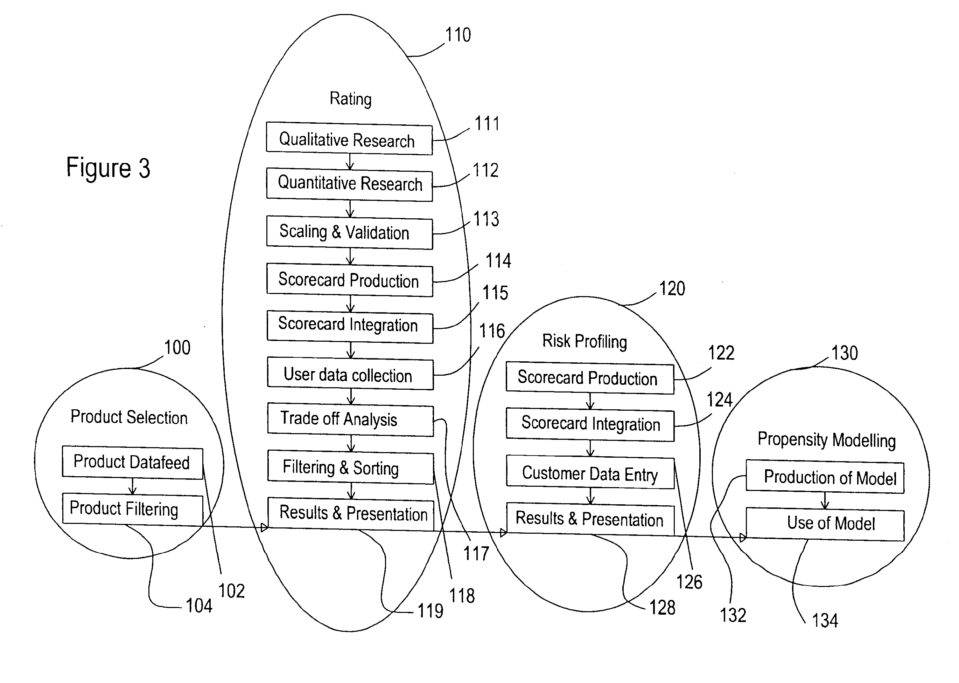

For these reasons, the preferred embodiment of the present invention utilizes a ratings engine and an optional filter to refine the results to be presented.
These are described now with reference to Fig. 3.

Fig. 3 is a process flow design illustrating a number of processes performed in the system 10 of Fig. 1 or in its associated databases. Some of these processes are performed in advance of a user logging on to the website 20 and others are performed during a user session on that website.

At the highest level, the overall process involves (from left to right in the figure) a product selection process 100, a ratings process 110, an optional risk profiling process 120 and a propensity modelling process 130.

The product selection process comprises a product datafeed process 102 and a product filtering process 104. In the product datafeed process 102, information is gathered about product features and price and is entered into the product datafeed 12. For this purpose, remote access connections to servers of service providers may be included (not shown) for automatic feeding of product data into product database 32. Product filtering process 104 uses pre-defmed filters which are selected in response to customer selections according to the customer's selected path along the decisioning tree. These filters allow the customer to navigate to a preferred product type.

Turning now to ratings process 110, the first five sub-processes are performed off-line. These include a qualitative research process 111, the aim of which is to identify the decision-making processes of consumers and the aspects of customer service felt to be important, using focus groups to build questionnaires for the quantitative research 112. In quantitative research process 112, a statistically significant sample of test customers give responses to on-line questionnaires, expressing their preferences with regard to product and service features, as well as providing personal data of a demographic nature, such as age and postcode. Using this data, quantitative research process 112 performs multivariate regression analysis to understand various trade-offs between product features, price and service, as entered by the sample of test customers. The results of this quantitative research process is a series of matrices, giving relative ratings (or weightings) between different product parameters (e.g. features versus price, price versus service and features versus service). In the field of mortgage products, multivariate regression analysis will analyse the trade-offs between features such as APR, loan-to-value ratio, total cost, cash-back, etc. Following the quantitative research process 112, there is a scaling and validation process 113, which uses the demographic data entered by the test customers and compares this with demographic data for the population of the market as a whole (e.g. demographic data for the adult population of the United Kingdom). The results of the quantitative research are adjusted where necessary so that they can be considered representative of the entire target market. These results are then fed to a scorecard production process 114, which captures this data in the form of scorecards scoring for service, product, feature and price, etc. These scorecards are produced for each product provider and the products offered by the different product providers, as stored in the product database 12. The processes 111, 112, 113 and 114 are performed in the ratings database 16, and the resulting scorecards are sent via mirror product database 32 to product database 12, where they are appended to their respective products via unique product ID's. The data is now ready for commencement of a user interactive session.

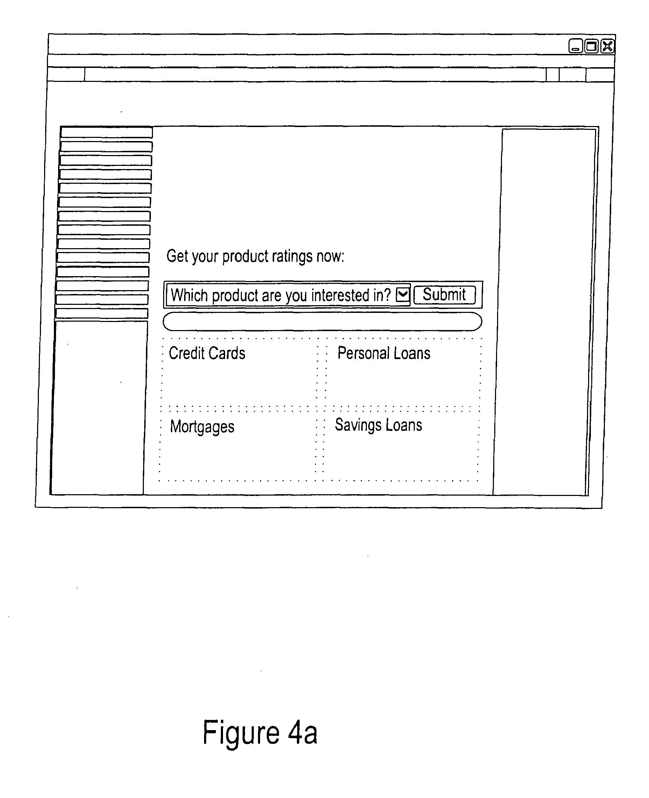

It has been mentioned that a user can be guided through the website 20 to the console. This console will be described in greater detail with reference to Figs. 4a to 4e. While navigating through the console, user data is collected in process 116. During this process, the user is invited to express his or her relative preference for parameters such as product features, price and service scores. A trade-off analysis process 117 then uses the scores to generate preferred scores for different providers or different products, based upon the scores from the scorecards stored in the product database 12. Note that this is not merely a question of applying different weightings to the existing scores. In effect the existing scores have already been given weightings by virtue of preferences expressed by the sample population of test users. When an actual customer expresses his or her preferences, these may, for example, mirror the median preferences expressed by the test population, in which case no adjustment of the scores in the scorecard may be necessary. On the other hand, this particular user may express a greater preference for a feature, such as price, in which case the trade-off analysis process 117 applies a greater weighting to that score in the scorecard. The degree of weighting applied represents a normalized weighting, i.e. the relative weight given to that parameter to this particular customer in proportion to the weight given by the sample population of test customers as scaled by the demographic data. As a result of the trade-off analysis process 117, the result set of products given by the product filtering process 104 is ready for presentation to the user in the refined presentation. A filtering and sorting process 118 takes the results set from process 104 and re-orders the results in accordance with the result of trade-off analysis process 117, and a first results and presentation process 119 presents those results in a refined order. Processes 118 and 119 may perform a truncation of the complete results set (e.g. showing only the top ten) or may filter results according to score (e.g. presenting only those results with three stars or more) or may apply no filtering, and permit the user to browse through the entire results set in the newly sorted order.

The above-described rating process 110 has the advantage of presenting results to the user in a manner that is more meaningful to the particular user. By posing questions to the user as to what are the user's particular preferences, the trade-off analysis is able to re-sort the results set according to the user's particular preferences. Moreover, a user will typically be unaware as to how his or her preferences differ from the preferences of a typical user, so the trade-off analysis is able to promote or demote providers or products, based upon the relative preference of the particular user in relation to a typical user. Additionally, the ratings process 110 does not rely on subjective opinions of experts, but uses actual sample data and makes this sample data representative of the population as a whole to create its raw scores, thereby enabling the trade-off analysis 117 to adjust the particular user's scores relative to scores that would be applied by real users in the population as a whole.

Reference is now made to the risk profiling process 120. This process is particularly useful for presentation of financial products such as mortgages. It aims to filter the results of the product filtering process 104 and the first results and presentation process 119 so as to eliminate or suppress products for which the customer's individual risk profile is unsuited. In an aggregating information system for other products (e.g. airline tickets), a risk profiling process is not necessary, but even in product delivery aggregation systems, there may be an advantage in a risk profiling process, e.g. to profile the user's ability to pay for the products ordered. This would be especially useful if the products were being purchased on a hire-purchase basis.

Risk profiling process 120 begins with a data processing process 122, in which existing accept/decline data is appended to postcode data and is processed through regression analysis to identify trends within the credit risk bands (super-prime, prime, near-prime and decline). Existing accept/decline data is gathered using historical data of all users who have used the website and applied for different products. When a user applies for a mortgage product, the application is processed by the provider and the provider may give an automatic rejection, merely based upon the data entered in the application form on the provider website. Alternatively the provider may refer the application to an underwriter and subsequently give an accept or decline result. In both cases, the provider delivers to the product database 12 a result comprising a base set of customer parameters. At a minimum, the base set of customer parameters may merely provide the customer postcode. This information is particularly useful because there are strong correlations between customer risk profiles and postcodes. A more complete set of parameters would include postcode, loan-to-value ratio, age and the like. The regression analysis performed by process 122 identifies correlations or trends between these parameters (e.g. between acceptance rate and postcode or acceptance rate and LVR for a given postcode, etc).

Over time, as more data is provided by the service providers regarding the success and failure of existing applications based upon this set of application parameters, the regression analysis performed by process 122 is able to improve, develop and refine a model by which classifications (i.e. super-prime/prime/sub-prime band scores) are generated for different user parameters, such as postcodes. In time, any given postcode will map to a score within one of these bands. It is found that aggregating/clustering the data by postcode is cheaper, more manageable and runs marginally quicker than using data at a higher level of resolution, without giving a markedly different result. The scores are then banded for ease of use. In time, as the data is built up, this will be available for postcodes down to the street level. Alternatively, regression analysis can build up models for these credit scores based on other parameters, such as age, or a combination of parameters, such as age and postcode. The exact nature of the data modelling is not critical, but in all cases a score is given in scorecard integration process 124 for a particular user parameter that will be entered by a user, particularly a new user with no personal history in the system, so that the system is able to map the new user to a credit score that is meaningful based upon a history of users similarly situated. Following generation of the data model in process 124, a user is ready to initiate a trade-off analysis process 126 described below.

A second results and presentation process 128 takes the results of first results and presentation process 118 and further filters the results set to provide a further filtered set of results. Alternatively, the second process 128 re-sorts the results of the first process 118 by presenting first those products for which the user matches the credit banding and suppressing in the sort order those products for which the user falls outside the required banding. Note that the banding stored for each product may be "soft" in the sense that there is a narrow range of banding for users who give a poor match against other criteria and a broader arrange of banding for users who are well-matched in relation to other criteria. In this manner, a service provider can tailor different criteria to determine which users are presented with that service provider's products. For a first service provider, credit rating may be critical, in which case that service provider may provide a narrow credit band with fixed boundaries, whereas another service provider may have a more diverse range of selection criteria and may prefer to provide a broader credit band, possibly with variable boundaries depending upon other user entered parameters, e.g. age, income, existing debt, expressed preferences, or even based upon propensity modelling, which is new and is described below.

Note that either one of the ratings process 110 or the risk profiling process 120 can be omitted. Each of these processes performs the function of refining the results list from the product filtering process 104, so it is not critical which of these processes is performed first, and neither is it critical that both processes are performed. Additionally, it may be noted that processes 104, 118 and 128 can be merged into a single process. They are shown as separate processes for purposes of convenience.

Following the risk profiling process 120 (or in parallel with it), there is a propensity modelling process 130. This process offers the potential of significant improvement in product aggregation websites. The propensity modelling process 130 has the purpose of anticipating the propensity towards a successful outcome for a given customer and a given product. In the case of financial products, a successful outcome would be a user applying for a certain product (e.g. a further product such as a credit card or a remortgage). Clearly it is the desire of both the lender and the user to present the user with products that are more likely to be requested by the user and to avoid wasting time with products that are less likely to be requested.

### Example 1

- Mr Jones, 1 Arcacia Avenue, LS1 7AH
- New Personal Loan Customer
- Propensity to purchase a card and remortgage within the next 12 months, with a calculated notional profit of £45,000.
- He weights the Ratings Service Measures at 85% and Product Feature Measures at 40%, and has a channel preference for the Internet.
- Therefore future cross-sell communication should promote credit cards and remortgage products with an emphasis on service and online functionality.

This information is supplied by the system to the service providers. Each propensity is tagged to the customer application when the application is made to a service provider. E.g. this customer's preference for the Internet is tagged. The examples of products he is likely to buy next are identified by tags, as is the profit score.

For the purpose of providing this propensity information, a model is built up, in which a user parameter is correlated against a history of successful and unsuccessful results. In building up the model, a successful result is a historical customer, who has in fact applied for (or been accepted for) a particular product, which is reported to the system 10 through the product database 12.

In addition to the afore-mentioned level of reporting, the service provider also reports the outcome of a specific application made by a specific customer to the customer database 38. This is explained now with reference to Fig. 2.

In Fig. 2, for each product displayed, there is an "apply" button 73 on the right-hand side of the screen. A "details" button, not shown, may be included. If a user is interested in the first product and wants to know more about it, he or she can press the "details" button, and this will lead the user to a description of that product. This description is preferably stored on the web server 48 as part of the whole aggregator display website 20 and includes the common include. (It is less preferred that the "details" button leads the user to the service provider's website, because the ability to track whether that user proceeds to apply for the product is then lost). If the user is interested in the product having read the details, the user can click on the "apply" button 73, whereupon the user is led to the website of that service provider, and specifically to an application form page on that website, where the user can apply for that product. The "details" page (not shown) can also have an "apply" button leading to the same website.

The action of clicking the "apply" button 73 causes a number of operations within the system 10. These include the following: a record is stored in the customer database 38 recording that this particular customer has selected that particular product to make an application (although it is not known whether the customer did in fact complete the application form); the user's browser is provided with a URL directing the user to the website of the service provider (and in particular the application form page of that website) and the user's browser is provided with a URL from the commercial database 30 thereby effecting a referral from the system 10 to the service provider website. The referral may identify the user by ID. Further appended to the URL is profile information giving a detailed profile of this particular user. Note that appending the profile of the user to the URL is not critical, but can be done in an off-line manner or in a batch manner. The profile information for the user is very valuable to the service provider, because it will give that service provider a unique profile of the person making the application that is not available merely from filling in an application form. This is described in greater detail below.

From the history of customers who have applied for mortgage products, and the results delivered back from the mortgage providers indicating the outcome of that application (e.g. automatic rejection based upon data or later rejection based upon underwriter decision/acceptance) and other information stored in the customer database 38 specific to that customer, models can be built up in which success and failure is correlated (using regression analysis) with various parameters for the user. The parameters for the user may be parameters entered by the user into the registration form of the website 20 (e.g. postcode, age, etc), but these are not the parameters of greatest interest for these purposes, because some of these have already been taken into account in the existing rating and profiling.

Of greater interest in the propensity modelling process 130 are parameters (or more generally categories or type profiles) that are not known to the user and not available merely by filling in a registration form or looking up a credit history for the user, but are generated within the system 10, particularly based upon historical behaviour of the user. The model correlates these parameters/categories/types with historical results. There are a number of examples of historical results which can be used for propensity modelling. One example is the success and failure of other users similarly situated in relation to a particular mortgage product. Another example is success in guiding applicants to apply for certain products.

An example of historical behaviour that can be correlated with success or failure lies in the user's navigation through the website 20. Different users have different habits in their browsing and navigation behaviours. Some users extensively search alternatives before making an application, whereas other users are less methodical and merely apply for the first product presented, still other uses opt for top-branded providers in preference to less familiar brands that may appear higher in the rankings. Yet further users express a belief that they are not influenced by a certain parameter (e.g. brand or price) and yet their actions prove that they are indeed sensitive to that parameter. Thus, for example, a user who is guided through the console and expresses a low emphasis on price, and yet who specifically requests low-price products in preference to products offering features or service, is exhibiting a particular type of behaviour. These types of behaviour can be classified as behaviour types, and regression analysis can be performed and correlations identified between behaviour types and successful outcomes. When a correlation is identified between a behaviour type and a propensity for a successful outcome, a model is generated in model production process 132. This model is then used in process with 134 to further refine results to be presented to this user, either by filtering or by re-sorting of results.

Propensity models can be used to predict the success or failure of acceptance by the service provider. As an example, let it be supposed that a number of correlations have been identified:
- selecting a product with the highest cash-back offering correlates slightly to an unsuccessful outcome;
- selecting payment holidays correlates highly to an unsuccessful outcome;
- selecting no early redemption fee correlates highly to a successful outcome.
In the preferred embodiment of the invention 'user-selected' product attributes are employed as predictors in a regression model in order to understand whether the user is likely to be successful or unsuccessful in their application. Each attribute contributes positively or negatively, and to a greater or lesser degree to the final model score. This final model score gives an indication as to whether the user will be accepted or rejected in their application to the financial services provider. The resulting model score is used to determine which products are promoted to the user, i.e. those for which they are likely to be accepted. If the acceptance criteria for service providers vary widely, a model can be built for each of the top brands and a generic model can cover all others.

A propensity model is not definitive of an outcome. It does not mean that any user who expresses a given behaviour will request (or be refused) a given product, but it is indicative (assuming the correlation has been shown) that a user exhibiting a certain behaviour (e.g. a "type A" user) has a lower likelihood of success should that user apply for certain products. On the other hand, the same behaviour type may show a positive correlation in relation to success for a product of a different nature. It would be advantageous to suppress the first type of product and promote the second type of product to this user, because a successful outcome would be more likely. Similarly, the same user may exhibit another behaviour type, let us call this "type B", which may show propensity for success to a particular type of product. Note that a given user may show multiple behavioural types and note that a given product may be mapped in the propensity models to more than one behavioural type.

Summarizing the arrangement described with reference to Figs. 1 to 3, a system has been described comprising: a web interface through which a user is able to express choices that define a result set, means for providing a filtered result set by filtering the result set based on postcode-based likelihood of acceptance (risk), wherein the risk is based on a model, and means for displaying the filtered result set. A further propensity model indicates a propensity towards a particular result for the particular user.

The propensity model that has been described is a very powerful tool, because it can be expanded in many ways, as will now be described further. A particularly useful tool in developing propensity models is the tracking database 50. Using the tracking database 50 and the applet or script that is loaded on to the user's browser, a great range of additional parameters is available to the system 10 indicative of the user's behaviour. Not only is it possible to identify to which pages the user browses (and from which he/she browses - i.e. the path), but it is possible to track the behavioural pattern to which the user navigates, the speed of navigation, the time spent deliberating over different options, the number of mouse clicks, the time between mouse clicks, the mouse clicks per page, etc. There are, in fact over 250 parameters that the tracking database can track. These include hovering over buttons (indicative of the user contemplating an action), delays between visits to the website (sometimes indicative of navigation to a service provider website and back again to the aggregator website 20) and many other factors. Further examples are given in Table 1 below. Many of these parameters are meaningful only in the context of the HTML document being viewed by the user. Thus, a tracker result indicating that a user is hovering over a particular point in the website is generally only meaningful if the tracking database in combination with the web server 48 is able to identify the button over which the user is hovering, e.g. that it is the "apply" button or the like.

Of course, many parameters will be meaningless, but among the many parameters that are reported, it is possible to select parameters that are anticipated as having a useful meaning, some of which have already been described, and to correlate these behaviours with success and failure in the propensity modelling process 130. Similarly, it may not be a question of correlating a simple parameter with success and failure, but in most cases it will be a combination of parameters that exhibit a certain behaviour, and that behaviour will be correlated with success or failure.

A further example of a behaviour is the tendency to select (e.g. click on), or select details of, or merely exhibit behaviour that it is indicative of contemplating a branded product versus a non-branded product. (By the term "branded" and "non-branded", what is meant is that there are certain products which will be in the top five (say) or top ten well-known brands, and these will be classified as "branded" while other products fall outside the market leaders and these are categorised as "non-branded"). Such categories can be sub-divided, e.g. branded bank and branded mutual society, etc, or the classifications can be further sub-divided into tier 1, tier 2 and tier 3, etc.

It is very useful to know that a given user shows a tendency to prefer products within these broad categories. It is further useful to know whether a user expresses such preferences, notwithstanding a previous indication indicating some different preference or intention. As has already been mentioned, a user may express a preference for features or service or price using the console, but may disregard those preferences and exhibit an entirely different behaviour when it comes to seeking details of products or contemplating products or applying for products. These actions are categorised by many different behavioural codes, and these codes are correlated against success and failure (using regression analysis), and where significant correlations are identified, these are stored as models in the model production process 132 and are then used in process 134 to improve the results being presented to the user, so that the user and service provider each have a greater propensity towards a successful outcome.

It has been described above, with reference to processes 111 to 114 that a sample set of test customers are invited to give responses to on-line and telephone questionnaires, expressing preferences with regard to product and service features. It has also been described above, with reference to trade-off analysis process 116 that a user is invited to express his or her relative preferences for these parameters. A console is now described, which can be used both for the test consumers in the quantitative research process 112 and an on-line user in the trade-off analysis process 116.

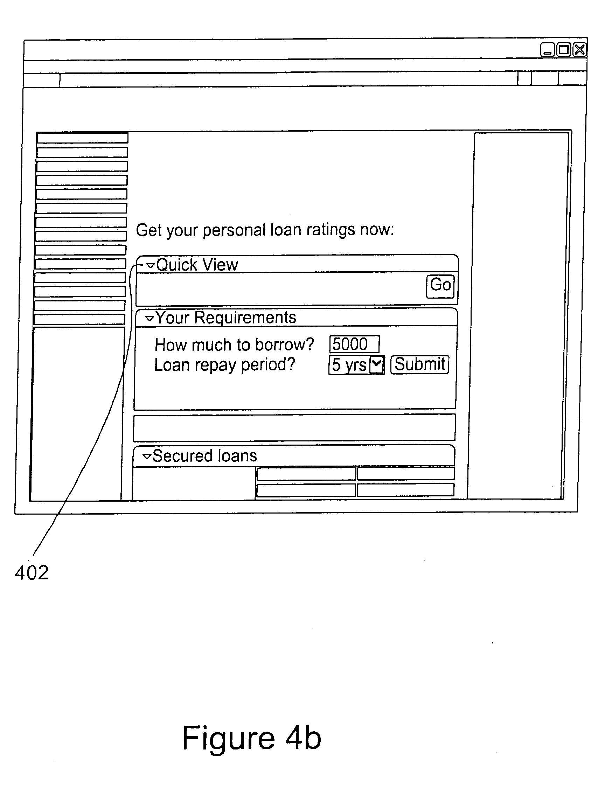

Referring to Figs. 4a to 4e, user screens are shown which are stored as HTML pages on webserver 48. The first page (Fig. 4a) invites the user to choose from four product categories (credit cards, mortgages, personal loans and savings loans). By way of example, if the user chooses personal loans, he or she is led to the screen of Fig. 4b.

In the screen of Fig. 4b, the user is asked to state the amount of loan required and the repayment period. A "Quick View" portion 402 of the screen gives a crude selection of products, as described with reference to Fig. 2 above.

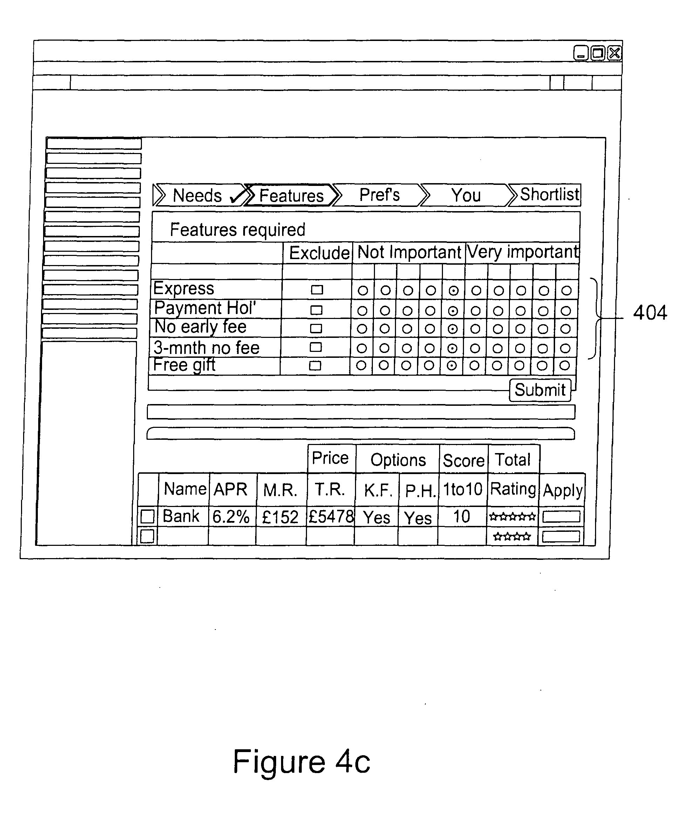

In the example shown in Fig. 4c, the user is invited to specify in greater detail preferred product features. There are five feature examples shown: "express delivery", "payment holidays", "no early redemption fee", "no payment for 3 months" and "free gift".

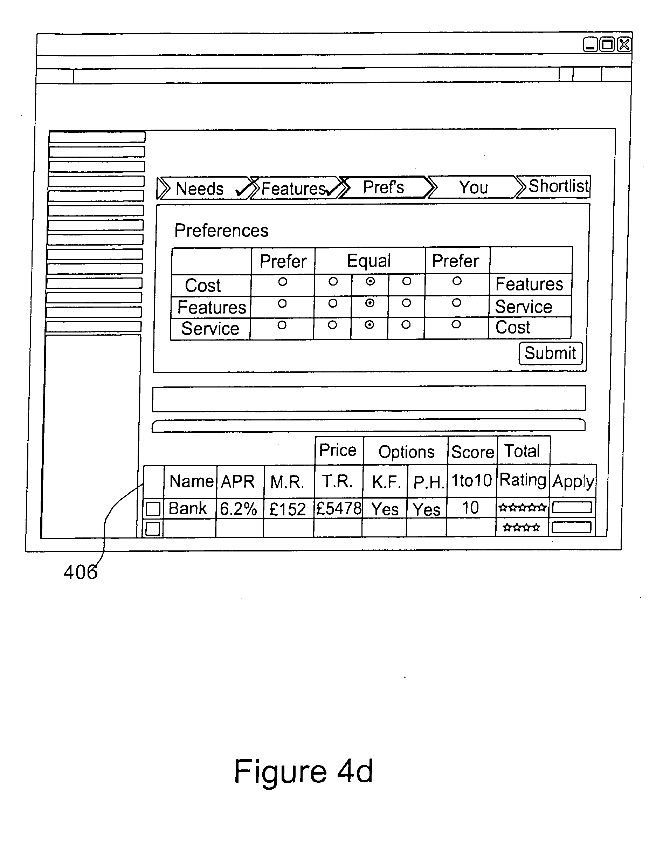

Next, the user is guided to a preferences screen shown in Fig. 4d. Here, the user is invited to indicate relative importance (trade-off) of different aspects of a product. There are three aspects that are to be measured. In this example, the user is asked to express relative importance of cost versus features, features versus service and service versus cost. The user is invited to click on a radio button to indicate the user's degree of preference between any two pairs of these three aspects.

Note that there may be fewer or more choices between which a user is asked to express preferences. Clearly if there are only two choices, only a single row of radio buttons is needed (and of course scroll bars and other means can be used instead of radio buttons). If there were four parameters to be traded off, ideally six rows of trade-off indicators would be presented.

In the lower portion 406 of Fig 4d, a list of products is given, filtered according to the user's expressed feature requirements, and rank-ordered by expressed preferences.

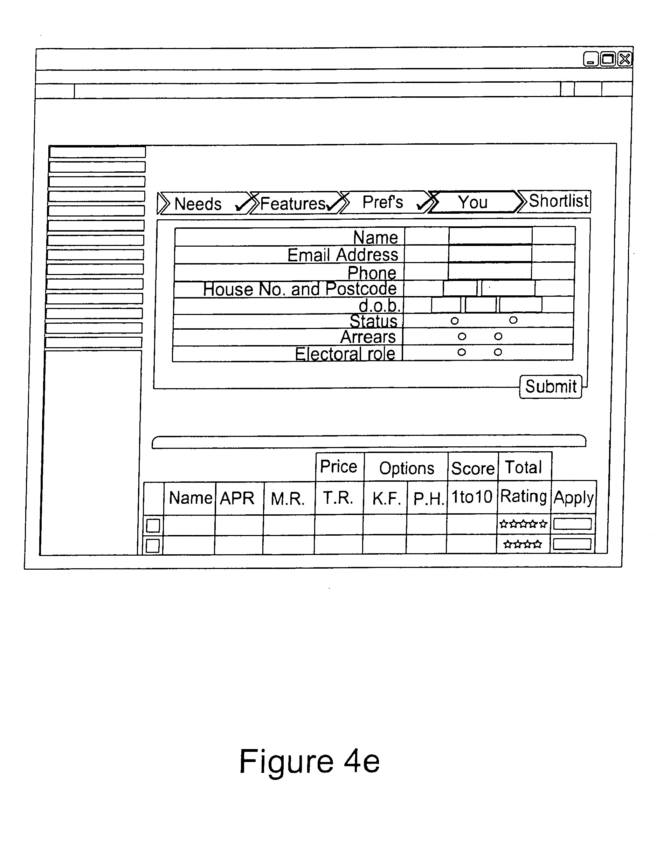

The next screen is shown in Fig. 4e and invites the user to input details about himself or herself.

A console similar to that illustrated in Figs 4a to 4e is used in the survey and in the off-line qualitative research process 111, whereupon multivariate regression analysis is used to produce different scores for the different features and parameters of service, price, and products etc.

When the console of Figs 4a to 4e is used in trade-off process 116, multivariate regression analysis can again be used to derive absolute scores, but a trade-off analysis is then used to compare this particular user's trade-off preferences with the trade-off preferences resulting from the multivariate regression analysis in the qualitative research and scorecard productions processes 111 and 114.

Note that the user can be presented with a set of raw unfiltered, unsorted results in display panel 70 (Fig. 2) without going through any registration or console, and can then be invited to work through the console to refine the results.

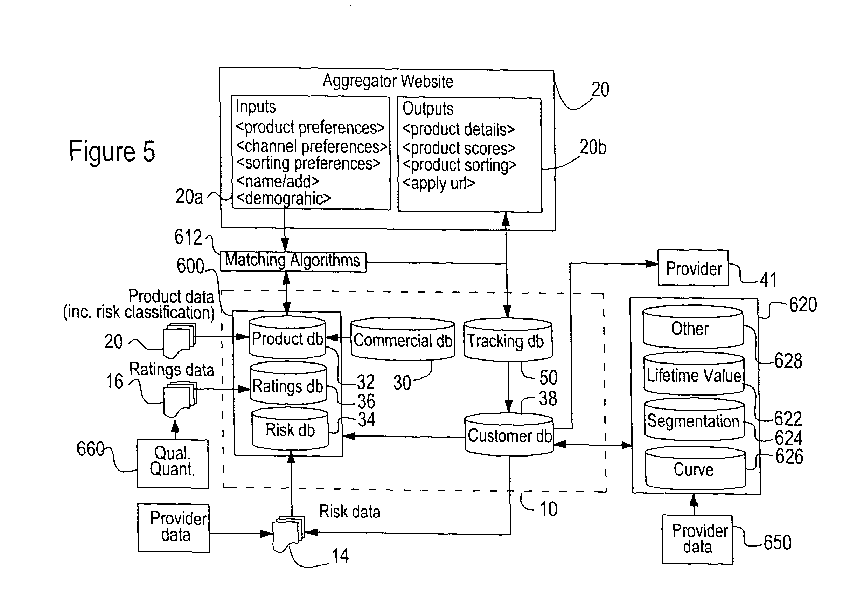

Turning now to Fig. 5, the system of Fig. 1 is redrawn for purposes of summarising some of the aspects already described. In Fig. 5, the central system 10 is shown, with the aggregator website 20 having input functions 20a and output functions 20b. The various databases of the system are collected together in central systems databases 600. Coupled between the website 20 and the central systems database 600 anare matching algorithms or means 612. Coupled to the customer database 38 are a set of propensity model databases 620, including a lifetime value database 622, a segmentation database 624 and a "curve" database 626, which will be explained below. Other databases 628 may be included here.. An input 650 is shown, coupled to databases of service providers, into which service providers can input parameters relevant to the products being offered, in particular risk parameters such as postcode and corresponding preferred credit bounds. On the left hand side of the figure a quantitative and qualitative receiving server 660 is shown, for receiving the survey results of processes 111 and 112 of Fig. 3.

In preparation for use, various data is imported into the various databases. Product data (including a classification of risk type <super prime> <prime> <near prime> <decline> is imported into the product database 32. At the point of import, the product data is combined with service, feature and price scorecard data which is a result of the qualitative and quantitative research. The risk data (based upon postcode corresponding classification of risk type) is imported to the risk database 34 quarterly. This data is the result of modelling actual provider accept/decline data to give a likelihood to be accepted based upon postcode.

In operation, the user accesses the input functions 20a of the aggregator website 20 and inputs information such as name and address, key financial information, channel preferences, demographics data, insurance information and the like. These cause the matching algorithms 612 to perform the ratings process 110 and the risk profiling process 120 of Fig. 3. The matching algorithms 612 match the ratings score and/or other details for this user against models stored in databases 600.

Utilising the user inputs (product preferences, sorting preferences, etc), the matching algorithms 612 combine the product and rating (price, feature and service) data with the users requirements to output a set of results. Product preferences, such as amount required or selection of specific features, are used to perform calculations and filter the results. Sorting preferences such as weighting features and an overall feature, price and service ranking enables the calculation of overall product value and the allocation of a score to each product. Default values for these preferences can be used to enable customer profiles to be generated. By imputing name and address details, the risk data is used to first allocate a risk classification for the customer's postcode then match the relevant product classifications in the product database.

The tracking database 50 records all user activity within the site including the following current marketing data:
- Referring campaign partner
- Pages visited
- Apply clicks

In addition to this, the tracking applet ("SpeedTrap" or equivalent) enables the capture of behavioural data including the following:

**Table 2**

| | | | |
|---|---|---|---|
| • | Navigate | • | Select |
| • | Navigate Info | • | Default Select |
| • | Click | • | Reset |
| • | Double Click | • | Network |
| • | Text Change | • | Page Data |
| • | Submit | • | Mouse Down |
| • | Key Press | • | Mouse Over |
| • | Key Up | • | Mouse Move |
| • | Key Down | • | Mouse Up |

All of the information is combined using a unique reference number per user and stored in the customer database.

Using the information gathered from the tracking components within the website, the customer database 38 can be combined with provider accept/decline data to generate additional customer insight data. This includes lifetime value, segmentation and risk model enhancement. This data is then appended to the customer records in the customer database to be distributed to the provider at point of application or following application.

The matching algorithms 612 include a look-up in segmentation database 624 to determine the segment of the market to which this user belongs (i.e. superprime/prime/subprime and decline) and to identify propensity codes stored in curve database 626 relevant for this user which indicate any propensity between a particular outcome based on particular data entered. When a propensity model is identified as relevant, this results in a match in matching algorithms 612. A result of these processes is a risk profile for the user. Further results include generation of parameters to be stored in central systems database 600. These parameters include LTV, seg., KFI and Risk. These can later be reported through the customer database 38 to the service provider 41, or can be reported at the URL at the time that the user makes an application for a particular product.

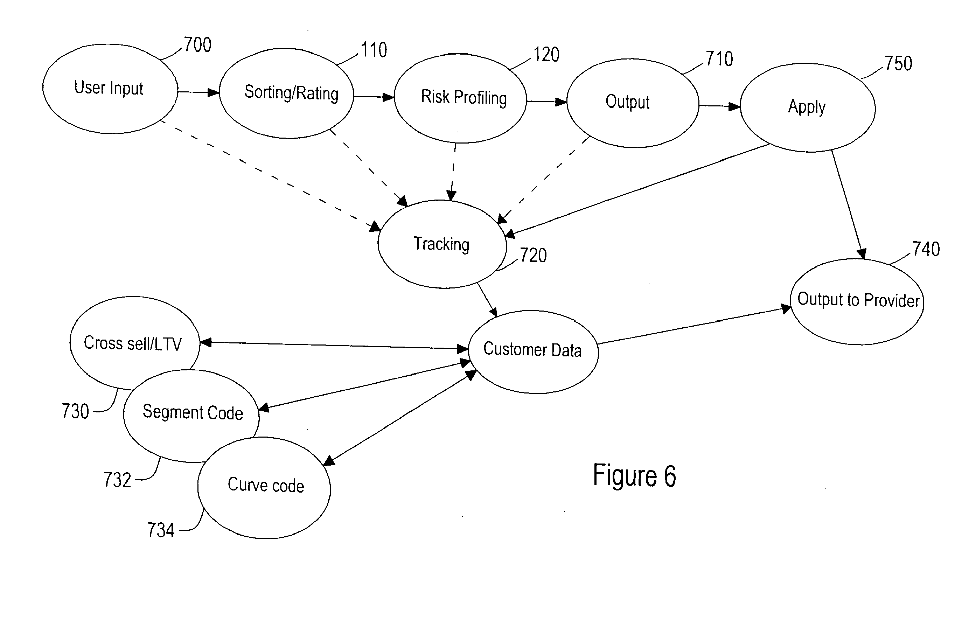

Turning now to Fig. 6, the rating process 110, and risk profiling process 120, already described with reference to Fig. 3, are redrawn, in the context of certain other processes which will now be described. An input process 700 is shown, inputting into the ratings process 110. This input process includes the consoles and various other website inputs already described. An output process 710 takes the output of the risk profiling process 120 and displays it to the user. This has already been described with reference to processes 118, 128 and 134 of Fig. 3. A tracking process 720 is performed concurrently with any or all of the above processes. This tracking process includes the "Prophet" (trademark) software already referred to. It collects inputs made by the user in any of the processes already described where user input is required, or even where user input may take place. Various model processes are shown, including cross-sell model and LTV score process 730, segment code generation process 732 and curve code generation process 734. These processes feed into an output to provider process 740, which is preferably initiated by an apply process 750. Note in particular that the tracking process 720 feeds into the various model processes 730, 732 and 734.

In operation, the user who generates input in process 700 and operates the ratings process 110 and the risk filing process 120 has his or her actions tracked by the tracking process 720. When the user reaches the output process 710 in which results are presented, the user has the option of clicking on the "apply" button, which causes process 750 to be activated. When this process is activated, an input is again given to the tracking process 720. At the same time, the apply process 750 causes activation of process 740, which generates an output to the service provider, for example in the form of codes that are appended to a URL. At the same time, the user is led back to the output process 710, permitting the user to carry on browsing, and, if desired, apply for another product, again activating process 750 and so on. The tracking process 720 tracks all these various activities and generates raw data, or data that is pre-processed to identify particular behaviours. The preprocessing of the data may include a set of rules (behaviour definitions) by which certain behaviours are defined, in which case the tracking process 720 gives an output when one of these rules is complied with or is matched by the user's behaviour. Alternatively, if the tracking process merely reports the raw data, these behaviours (whether rule-based or otherwise) are identified in the various models 730, 732 and 734. In either case, a profile is generated for the user.

Based upon the user input, products are rated, filtered, sorted and any products that do not match the user's risk classification are filtered out before the presentation of results. All of this information is tracked and entered into the customer database. When "apply" is selected or following the application, the information collected is modelled to output a cross-sell or LTV score, segment or curve code to the provider.

As an example, any user may be categorised as a type-A user. This type of user may be categorised as a user who looks for several products before applying for a product. This means that such a type of user is defined by a predefined rule and this particular user has matched that rule and is therefore categorised as that type of user. The processes 730, 732 and 734 then match that type of user against models. An example may be that such a type of user tends to bank with the top four banks. Another example may be that such a type of user tends to shop online. This is very valuable information for models such as a cross-sell model. If this type of user tends to shop online, this increases the score for this user in an on-line cross-selling model. This user would be valuable for cross-selling other products online. As another example, this information may tend to increase the lifetime value of this user to a bank, because the top four banks prefer to market to users who do not switch frequently between banks. Similarly, segment codes can be generate to segment these users into different risk segments.

Other codes can be stored and matched in curve code processor 734. The results of these models 730, 732 and 734 are provided to the service providers in the output provider process 740.

It has been explained that by keying an address and postcode, a user will be presented with providers who are more likely to accept them for their chosen product. At the same time, the lifetime value model process 730 is applied to the consumer's address details, which will generate a future value of the individual, based upon his or her likely propensity to purchase additional products. The lifetime value model is a combination of marketing expertise, consumer research data and data analysis. It provides a predictive indication of a consumer's future potential to purchase financial products and services within a given time frame, and assigns a notional value (e.g. profits).

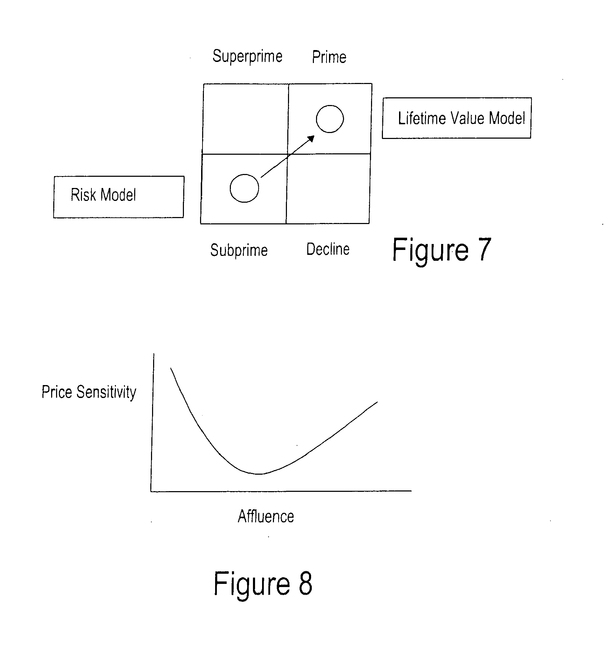

The lifetime value model presents two key benefits for the proprietor. It can be supplied at the time of application, therefore a more lenient view of the consumer may be taken during risk underwriting, based on their future potential value to the organisation (as illustrated by Example 1 above). This is illustrated in Fig. 7. Fig. 7 shoes that the risk model assesses the current position of the consumer as being sub-prime, whereas the lifetime value model assesses the future cross-cell potential of the consumer as being prime. Such a consumer who may have previously been declined service, may now be accepted for service. Another benefit of the lifetime value model is that it can be supplied to the provider post-application, in order to provide additional insight for the provider's CRM strategies, using the results of the segmentation model. The segmentation model is provided by a segmentation tool which overcomes the obstacles that undermine marketers' efforts to identify and target consumers. For example, it is possible to provide cross-sell potential, and potential profitability of overall financial services needs, allowing marketing campaigns to be optimised.

Existing attitudinal and behavioural descriptions are not enough, especially as more and more lifestyles are emerging providing more segments with fewer consumers contained within them. Conventional segments do not provide enough information about the way products and services should be sold to individual consumers. Since the system described herein captures data in the consumer's motivation to financial services (or other products), marketers will be able to target people with a greater likelihood of buying their products and services using the right messages and channels to market.

The segmentation model is again a unique blend of marketing expertise, consumer research and database analysis. It combines three sources of data: (a) unique consumer research captured by online consumer behaviour, weighted measures for price, product features and service requirements, answers to product filter questions, trade-off questions and calculators, preferences for channel and brand, lifetime value and risk profiles; (b) bespoke consumer research on consumer's satisfaction of service, decision making processes and key drivers to buy financial products; and (c) lifestyle and demographic data. Predictive modelling is applied to these three sources of data, and unique segments are devised and named as the model output results.
- The system has the ability to code every adult in the population (for example the 45 million or so adults in the United Kingdom) by their segment type. Particular interest is given to the sub-prime market, adding huge marketing value to a currently limited sector. The combination of the segmentation model and the provider's database gives marketers a unique insight into individual consumer needs, for example to consumer relationship management strategies. CRM strategies use this model to match creative treatments to customer type. The creative treatments can be delivered by the most relevant channel to the individual, communicating relevant products and services.

The curve code process 734 uses new models generated uniquely using the blended data collected. Using the data analysis process, a number of hypotheses are tested, e.g. consumer affluence against price sensitivity. Significant correlations emerge, an example of which is shown in Fig. 8, which is merely illustrative and is not to scale.

This illustration shows that price sensitivity is at a minimum at a certain level of affluence (e.g. salary). This information can simply be output to the providers through interface 41, or can be used to filter or skew the results* presented to a user to whom this particular optimisation is relevant.

In summary, an improved system is described with a new ratings process that provides a unique insight and understanding of online consumers' behaviours and decision making (for example in the UK financial services marketplace). The system:
- Enables comparison of price, product features and service measures, including weightings of those measures;
- Provides postcode-based risk profiles of the consumer;
- Provides consumer lifetime value and cross-sell potential within a given time frame;
- Has the capability to track the behaviour and decision making process of the consumer in the online environment; and
- Enables a matching process of the consumer to a provider and vice versa.

A system has been described that takes a consumer down a decisioning process which allows price, product features and service measures to be traded off. It enables the consumer to view the decision they have made, and change their selections at any point in the decisioning tree. The information within the process enables the formulation of a uniquely rich customer database.

Additional features include: session saving, which enables a use to return to a saved session and profile, thus minimising the requirement for repetitive data entry; a last-viewed products feature that enables the customer to return to a results set based upon the customer's last session; and a profile matching process that enables a user to view other products with similar customer profiles.

The above description has been given by way of example only and modifications of detail can be made within the scope of the invention.

## Claims

1. An information system comprising:
a web server for serving web pages to an internet, the web server having means for delivering an applet or script to a browser of a user to capture user actions and means for retrieving the user actions from the applet or script, and
a profiling engine for performing correlations on actions of users to thereby categorize users according to browsing actions.

2. An information system in accordance with claim 1, wherein the profiling engine correlates actions of users with profile data for those users to search for correlations therebetween.

3. An information system comprising a web server for serving web pages to an internet, the web server having means for delivering an applet or script to a browser of a user to capture user actions and means for retrieving the user actions from the applet or script, and
a profiling database having behaviour definitions stored therein, and having means for comparing captured user actions with behaviour definitions to categorize a user according to the user actions.

4. An information system in accordance with any one of claims 1 to 3, wherein the user actions include user selections among choices presented by the web pages.

5. An information system in accordance with any one of claims 1 to 4, wherein the web pages invite the user to select products or services having different brand categories, and wherein the user actions include selection of products or services by brand category.

6. An information system in accordance with any one of claims 1 to 5, comprising means for comparing user actions with stated user preferences, means for identifying user actions that are contradictory to stated user preferences and means for adjusting a user profile when a user takes an action that is contradictory to a stated preference.

7. An information system comprising:
a product database for storing data relating to products or services,
a risk model database for storing data modelling the likelihood of an outcome in relation to the products or services, and
a web server coupled to the product database and the risk model database, wherein the web server comprises:
means for providing web pages through which a user is able to express choices,
query means for querying the product database in accordance with the user choices to provide a raw result set,
filter means for providing a filtered result set by filtering the raw result set based on the risk model database to eliminate results not having a likelihood of a successful outcome, and display means for displaying the filtered result set.

8. An information system in accordance with any one of claim 7, wherein the risk model data is built up using tracking data defining past behaviour of the user when using the website.

9. An information system in accordance with claim 7 or 8, further comprising:
a risk profiling database coupled to the web server, wherein the web server provides means to invite a user to enter user data and wherein the web server queries the risk profiling database using the user data to thereby deliver at least one risk score;
means for obtaining a preferred range of risk scores for each result within the result set; and
refining means for refining the result set based upon the risk score for the user,
wherein the display means displays the refined results.

10. An information system in accordance with any one of claims 7 to 9, further comprising means for inviting a user to express preferred attributes, means for capturing a preferred attribute set for the user, and means for rank ordering the filtered result set based on the preferred attribute set.

11. An information system in accordance with claim 10, wherein the means for rank ordering takes into account the user's preferred attribute set relative to preferred attributes previously obtained through sampling.

12. An information system in accordance with any one of claims 7 to 11, further comprising a customer profiling engine for developing a profile for a user, wherein the web server provides the user with a click-through button for each of the displayed results to direct the user to a provider website at which the corresponding product or service can be obtained, and wherein the website captures data relating to a click-through action by the user and directs this data to the customer profiling engine to update a profile for that user.

13. An information system in accordance with claim 12, wherein the web server has an interface with a provider server that serves the provider website, and wherein the web server delivers to the provider server a universal resource locator (URL) having profile data for the user appended thereto.

14. An information system in accordance with any one of claims 7 to 13, further comprising means for delivering an applet or script to a browser of a user to capture user actions while the browser is browsing web pages served by the web server, and wherein the web server is arranged to maintain a session with the browser and to obtain the user actions from the applet or script during the session.

15. An information system in accordance with claim 14, wherein the web server is arranged to obtain from the user's browser information indicating that the user has returned to the web pages served by the web server following a browsing sequence in which web pages of another server have been browsed.

16. An information system in accordance with any one of claims 7 to 15, further comprising a propensity model database for storing data modelling the propensity of an outcome in relation to related products or services.

17. An information system in accordance with claim 16, wherein the propensity model data is built up using tracking data defining past behaviour of the user when using the website.

18. An information system in accordance with claim 16, wherein the propensity model database scores propensity towards a successful outcome based upon at least one of: demographic data and lifestyle data.

19. An information system in accordance with claim 9, wherein the user data comprises at least one of: user identity and postcode/zipcode.

20. An information system in accordance with claim 7, wherein the risk model database scores likelihood of a successful outcome based upon at least one of: postcode, demographic data and lifestyle data.

21. An information system comprising means for receiving from a third party historical data describing the outcome of previous referrals, and means for refining a risk model using the historical data, wherein the risk model is used to control a filter to provide a filtered result set by filtering the raw result set based on the risk model database to eliminate selected results.
